# EUROPÄISCHE PATENTSCHRIFT

(11) **EP 0 678 534 B1**
(45) Veröffentlichungstag und Bekanntmachung des Hinweises auf die Patenterteilung: **28.06.2000**
(21) Anmeldenummer: 95105709.0
(22) Anmeldetag: 15.04.1995
(51) Int. Cl.: C08F 291/00, C08F 271/00, C08F 261/06, C09K 9/02, B32B 17/10

(54) **Gele mit thermotropen Eigenschaften**
Gels having thermotropic properties
Gels ayant des caractéristiques thermotropiques

(30) Priorität: 22.04.1994 DE 4414088
(43) Veröffentlichungstag der Anmeldung: 25.10.1995
(73) Patentinhaber: BASF Aktiengesellschaft, 67063 Ludwigshafen (DE)
(72) Erfinder: Kröner, Hubertus, Dr., D-67435 Neustadt (DE); Jahns, Ekkehard, Dr., D-69493 Hirschberg (DE); Mielke, Manfred, D-69118 Heidelberg (DE)

(56) Entgegenhaltungen:
- EP-A- 0 311 566
- DE-A- 2 658 643
- DE-U- 9 316 261
- GB-A- 2 121 421

## Beschreibung

Die Erfindung betrifft ein Verfahren zur Herstellung von Gelen für thermotrope Schichten, dadurch gekennzeichnet, daß eine Mischung, enthaltend
a) ein unvernetztes Polymer, ausgewählt aus Poly-N-Vinylcaprolactam, Copolymere von N-Vinylcaprolactam mit mindestens 20 Gew.-% N-Vinylcaprolactam oder Polyvinyletherhomo- oder- copolymerisate
b) radikalisch polymerisierbare Monomere, wobei es sich um ein Monomerengemisch aus 70 bis 99,9 Gew.-% radikalisch polymerisierbaren, nicht vernetzbaren Monomeren D und 0,1 bis 30 Gew.-% vernetzbaren Monomeren E handelt, und
c) Wasser oder ein organisches Lösungsmittel oder deren Gemische
   mit energiereichem Licht bestrahlt wird.

Die Notwendigkeit zur rationellen Energieverwendung und auch die Nutzung der Sonnenenergie zum Heizen von Gebäuden setzt hocheffektive und intelligente Systeme voraus, die die solarenergetischen Systeme (Fenster, Kollektoren, Hausfassaden) optimal an die Witterungsbedingungen und Benutzeranforderungen anpassen. Ein qualitativ hochwertiges Fenster in einer Bürofassade sorgt für angenehme Temperaturen im Winter und führt damit zur Energieeinsparung. Spätestens im Frühjahr wird das gleiche Fenster zur Überhitzung und damit auftretenden Kühllasten führen und die Energieeinsparung des Winters zunichte machen. Daher ist es offensichtlich, daß in optimierten Systemen Steuerungsmechanismen zur Regelung des Strahlungs- oder Wärmeflusses notwendig sind. Diese Steuerung kann teils passiv geschehen, wie zum Beispiel die Abschattung durch Überdachungen oder Balkone oder aktiv mechanisch durch Rolle- oder Markisensysteme. Vieler dieser Systeme sind jedoch nicht effektiv genug, zu teuer oder in ihrer Langzeitbeständigkeit nicht ausreichend, was wiederum zu Mehrkosten führt.

Die Idee elektro- oder thermooptische Systeme zur Steuerung einzusetzen, taucht immer wieder auf, führte jedoch bisher aufgrund materialmäßiger oder systemtechnischer Probleme noch nicht zum entscheidenden Durchbruch.

Eine effektive und kostengünstige Methode zur Regelung des Strahlungs- und Wärmeflusses besteht in der Verwendung von thermotropen Schichten. Diese Schichten sind im ungeschalteten Zustand transparent und trüben sich erst oberhalb einer bestimmten Schalttemperatur ein. Die Eintrübung ist vollkommen reversibel, d.h. bei Abkühlung auf Temperaturen unterhalb der Schalttemperatur werden die thermotropen Schichten wieder vollkommen transparent.

Gele, welche in thermotropen Schichten Verwendung finden, sind z.B. in DE-A-2658643 und DE-A-3522078 beschrieben.

DE-A-2658643 betrifft ein Verglasungssystem mit veränderlicher Transparenz. Es besteht aus einem Gel, das überwiegend aus einem Copolymer von Acrylamid und Methylolacrylamid besteht und das bei Raumtemperatur polymerisiert wird. In das Gel ist eine thermosensible Substanz wie Polyvinylmethylether oder Polyvinylcaprolactam eingebettet. Ein Nachteil dieses Verfahrens ist die Herstellung des Gels durch Polymerisation in Gegenwart von Radikalstartern wobei man nur sehr kurze Topfzeiten (10 Minuten) hat, bei denen die Masse appliziert werden kann.

DE-A-3522078 beschreibt die Herstellung von Gelen mit temperaturabhängiger Lichtdurchlässigkeit für die Verwendung in Bauelementen. Grundlage des Gels ist ein Carboxyinylpolymer, das durch Zugabe von Basen verdickt wird und dann eine gelartige Masse bildet. In dieser Masse sind Polyetherverbindungen eingelagert, die bei Temperaturerhöhung die Trübung verursachen. Nachteile dieses Systems liegen vor allem darin, daß das Carboxyvinylpolymere nicht chemisch vernetzt ist und es daher zu makroskopischen Entmischungsvorgängen kommen kann. Diese Entmischungsvorgänge bewirken, daß die Schicht sich entweder bei Temperaturerhöhung nicht mehr ausreichend eintrübt oder die Trübung nicht mehr ausreichend reversibel ist. Außerdem besitzen die aus diesen Gelen aufgebauten Schichten einen relativ schlechten Schaltkontrast.

Aus der EP-A-311566 sind Hydrogele mit thermotropen Eigenschaften auf Basis von Copolymeren aus N,N-Dimethylacrylamid und Alkylacrylaten bekannt, welche z.B. durch Bestrahlung mit energiereichem Licht hergestellt werden.

Bisher bekannte thermotrope Schichten, welche mit Gelen hergestellt werden, weisen noch eine Reihe von Nachteilen auf. Mangelhaft ist insbesondere die Langzeitstabilität des Schaltvorgangs transparent/trüb Gewünscht ist, daß auch nach vielen Wiederholungen des Schaltvorgangs der Transparenzunterschied groß und die Schalttemperatur bzw. der Schaltbereich möglichst eng bzw. scharf bleibt. Des weiteren ist vielfach der Transparenzunterschied oberhalb und unterhalb des Schaltbereichs nicht groß genug. Gewünscht ist in diesem Zusammenhang insbesondere eine möglichst hohe Transparenz im homogenen Zustand, d.h. unterhalb der Schalttemperatur

Unzureichend ist im allgemeinen die Schaltzeit, also die Zeit in der das thermotrope System sich auf ändernde Außentemperaturen einstellt.

Darüber hinaus besteht ein Bedarf für Verfahren zur Herstellung von thermotropen Schichten welche unterhalb des Schaltbereichs möglichst homogen sind und keine Schlieren aufweisen.

Aufgabe der vorliegenden Erfindung war daher ein Gel für thermotrope Schichten bzw. ein Verfahren zu dessen Herstellung, durch welches den voranstehend genannten Nachteilen abgeholfen wird.

Demgemäß wurde das eingangs definierte Verfahren gefunden.

Die Gele werden erhalten durch Bestrahlen einer Mischung, enthaltend die Komponenten a) b) und c) mit energiereichem Licht.

Als Komponente A) eignen sich insbesondere unvernetzte Polymere, welche thermotrope Eigenschaften in der Weise aufweisen, daß eine 10 gew. -%ige Lösung dieses Polymeren in dem gewählten Lösungsmittel c), d.h. in Wasser oder einem organischen Lösungsmittel bzw. deren Gemische in einem Schaltbereich umfassend weniger als 20°C eine Änderung der Transmission von Licht bei einer Wellenlänge von 600 nm und einer Schichtdicke von 10 mm aufweist, so daß oberhalb des Schaltbereichs weniger als 50 % des einfallenden Lichts und unterhalb des Schaltbereichs mindestens 70 % des einfallenden Lichts transmittiert werden. (Bei Messungen mit steigender oder fallender Temperatur zur Bestimmung der Transmission wird jeweils gewartet bis das Polymer bzw. das Gel die neu eingestellte Temperatur angenommen hat.)

Der Schaltbereich bzw. die Schalttemperatur liegt vorzugsweise im Bereich von 20 bis 90 besonders bevorzugt zwischen 20 und 50°C und ganz besonders bevorzugt im Falle von Verglasungssystemen im Bereich von 20 bis 40°C.

Der Schaltbereich sollte vorzugsweise weniger als 10°, besonders bevorzugt weniger als 5°C und ganz besonders bevorzugt nur 1°C oder weniger betragen.

Unterhalb des Schaltbereichs beträgt die Transmission vorzugsweise mindestens 90 %; oberhalb vorzugsweise weniger als 30 %.

Die thermotropen Eigenschaften des Polymeren werden vorzugsweise durch eine begrenzte Löslichkeit des Polymeren in dem gewählten Lösungsmittel oder -gemisch verursacht.

Die Temperatur oberhalb der die Polymere nur eine begrenzte Löslichkeit haben, bezeichnet man als im üblichen Sprachgebrauch als "lower critical solution temperature" (LCST) oder als Trübungstemperatur. Unterhalb der LCST sind die Polymeren in dem Lösungsmittel in der gewählten Menge weitgehend löslich, oberhalb der LCST bilden Lösungen aus diesem Polymeren ein mehrphasiges System, das aus mindestens einer polymerreichen Phase besteht und einer polymerarmen Phase. Dabei enthält das Lösungsmittel der polymerarmen Phase weniger als 50 % des ursprünglich im Lösungsmittel gelösten Polymeren. Die polymerreiche Phase enthält überwiegend Polymer, kann aber auch noch in dem Polymer eingeschlossenes Lösungsmittel oder an das Polymer angelagertes Lösungsmittel (z.B. Hydratwasser) enthalten.

Das Polymer a) ist vorzugsweise ein radikalisches Polymerisat und besteht vorzugsweise z.B. aus folgenden Monomeren:
- 60 - 100: insbesondere 90 - 100 Gew. -% Monomere A
- 0 - 20: insbesondere 0 bis 10 Gew. -% vernetzend wirkende Monomere B
- 0 - 20 %: sonstige Monomere C

Wird Wasser als Lösungsmittel c) oder Hauptbestandteil des Lösungsmittels (mehr als 50 Gew.-% des Lösungsmittelgemischs) verwendet, so sind geeignete Monomere A N-Vinyl-caprolactam

Als Monomere A kommen weiterhin Vinylether der Formel I

H₂C=CH-OR I

oder hydrophile Vinylether der Formel II

H₂C=CH-OR¹ II,

in Betracht worin

R für eine C₁-C₂₀-Alkylgruppe steht und R¹ für einen aliphatischen oder cycloaliphatischen Rest steht, der durch Hydroxylgruppen substituiert sein kann oder durch nicht benachbarte Gruppen -Y-unterbrochen sein kann, Y die Bedeutung eines Sauerstoffatoms, eines Schwefelatoms, einer Gruppe NR² oder N⁺N²R³X⁻ hat, worin R² und R³ unabhängig voneinander für ein Wasserstoffatom oder eine C₁-C₄-Alkylgruppe stehen sowie X⁻ für ein Gegenanion steht und das molare Verhältnis von Kohlenstoffatomen zur Summe aus Gruppen Y und Hydroxylgruppen in dem aliphatischen oder cycloaliphatischen Rest R¹ 1,01:1 bis 6,5:1 beträgt.

Als Vinylether der Formel I zu nennen sind insbesondere C₁-C₄-Alkylvinylether z.B. Methylvinylether, Ethylvinylether, Propylvinylether, Isopropylvinylether, n-Butylvinylether, iso-Butylvinylether und z.B. Dodecylvinylether.

Besonders bevorzugt ist Methylvinylether.

In Vinylethern der Formel II ist -Y- bevorzugt ein Sauerstoffatom.

Vinylether der Formel I oder II können z.B. für sich alleine oder in einem Gemisch miteinander, bevorzugt aus 40 bis 100 Gew. -% der Vinylether I und 0 bis 60 Gew. -% der Vinylether II als Monomere A eingesetzt werden.

Wenn Polymer a) auch vernetzbar sein soll, können auch Monomere B copolymerisiert werden, die eine kovalente Vernetzung der Polymerketten während oder nach der Polymerisation bewirken können.

Derartige Monomere B können zwei- oder mehrfach ethylenisch ungesättigte Verbindungen sein, wie z.B. Methylenbisacrylamid, Poly(ethylenoxid)-diacrylate und -dimethacrylate; Poly(propylenoxid)diacrylate, etc.

Geeignete Monomere B können auch ethylenisch ungesättigte Verbindungen sein, die durch Einwirkung von Strahlung wie z.B. UV-Strahlung, Additionsreaktionen mit sich selbst oder anderen vorhandenen Gruppen eingehen können. Derartige Monomere sind z.B. Zimtsäureglycidylmethacrylat, Furylacrylsäureglycidylmethacrylat; Zimtsäure (4-acryloxybutyl)ester; Zimtsäure(2-acryloxyethyl)ester; Zimtsäure(2-acryloxy-1-hydroxyethyl)ester, Furylacrylsäure(4-acryloxybutyl)ester; Furylacrylsäure(2-acryloxyethyl)ester; Furylacrylsäure(2-acryloxy-1-hydroxyethyl)ester etc.

Geeignet sind auch Coumarinderivate wie sie z.B. in Macromolecules, 23; S. 2693-2697 (1990) beschrieben sind oder p-Formylstyrolderivate wie sie in J. Polym. Sci. Polym. Chem. Ed. 20; S. 1419-1432 (1982) beschrieben sind.

Die Anwesenheit von Monomeren C ist im allgemeinen nicht erforderlich und daher nicht bevorzugt.

Besonders bevorzugt besteht Polymer a) im wesentlichen nur aus Monomeren A und enthält auch keine vernetzend wirkenden Monomeren B.

Das Polymer a) ist daher vorzugsweise vor und nach der Bestrahlung mit energiereichem Licht unvernetzt.

Polymere a) sind Poly-N-Vinylcaprolactam, Copolymere von N-Vinylcaprolactam mit mindestens 20 Gew. -%, N-Vinylcaprolactam und Polyvinyletherhomo- oder copolymerisate.

Neben den Polymeren a) enthält die Mischung radikalisch polymerisierbare Monomere b).

Die Monomeren b) bilden nach Bestrahlung mit energiereichem Licht ein dreidimensionales Netzwerk, d.h. ein Gel welches in dem gewählten Lösungsmittel oder Lösungsmittelgemisch nicht bzw. kaum löslich ist. Das aus Monomeren b) gebildete Netzwerk hat vorzugsweise keine thermotropen Eigenschaften oder weist allenfalls einen Schaltbereich auf, der mindestens 20°C oberhalb des Schaltbereichs des Polymeren a) liegt. Vorzugsweise liegt ein gegebenenfalls vorhandener Schaltbereich oberhalb des Siedepunkts des gewählten Lösungsmittels oder Lösungsmittelgemischs bei Normaldruck (1 bar).

Bei den Monomeren b) handelt es sich um ein Monomerengemisch aus
- 70 bis 99,9 Gew. -%: vorzugsweise 85 bis 96 radikalisch polymerisierbaren, nicht vernetzbaren Monomeren D und
- 0,1 bis 30 Gew.-%: vorzugsweise 4 bis 15 Gew.-% vernetzbarer Monomere E

Als Monomere D geeignet sind z.B. Vinylester von 1 bis 20 C-Atomen enthaltenden Carbonsäuren, welche teilweise oder vorzugsweise ganz zu Vinylalkoholen verseift sein können, (Meth)acrylamid, (Meth)acrylsäure, N-substituierte (meth)acrylamide, hydrophile Vinylether der Formel II. Des weiteren kommen Hydroxygruppen enthaltende (Meth)acrylate, wie C₁-C₂₀-Hydroxyalkyl(meth)acrylate, oder N-Methylolmethacrylamid in Betracht.

Als vernetzend wirkende Monomere E sind solche geeignet, welche mindestens 2 copolymerisierbare, ethylenisch ungesättigte Gruppen oder mindestens eine ethylenisch ungesättigte Gruppe und mindestens eine weitere reaktive, z.B. zu Kondensationsreaktionen befähigte Gruppe enthalten.

Zu nennen sind z.B. Monomere mit 2 oder mehr Acrylgruppen wie Polyethylenoxiddiacrylat, Methylenbisacrylamid.

Geeignete Lösungsmittel c) als Bestandteil der Mischung sind z.B. Glykole wie Ethylenglykol, Propylenglykol, Diethylenglykol, Dipropylenglykol, Glykolether wie Glykolmethylether, Diethylenglykolmono- und diether sowie Wasser.

Bevorzugt ist Wasser als Lösungsmittel oder ein Lösungsmittelgemisch, welches mindestens 60 Gew.-%, vorzugsweise 90 Gew.-% Wasser, bezogen auf das Lösungsmittelgemisch, enthält.

Die Kombination von Wasser mit einen der o.g. Lösungsmitteln hat den Vorteil, daß die Froststabilität der Gele erhöht wird. Die thermotropen Schichten sollen auch im Winter in den Anwendungen verbleiben. Dabei sollen sie die gleiche Funktion erfüllen wie im Sommer. Daher ist es notwendig, die Gele gegen Einfrieren zu stabilisieren. Dies ist notwendig, da das gefrierende Wasser zu dauerhaften Schäden an dem Gel oder an dem gesamten System (d.h. Gel und Trägerkonstruktion) verursachen kann. Eine Herabsetzung des Gefrierpunktes des Gels wird durch Zusatz von Glykolen, Glykolethern oder Alkoholen mit niedrigen Alkylketten erreicht. Den gleichen Effekt kann man auch erhalten, wenn das Lösungsmittel lösliche Salze enthält. Bei den Salzen ist jedoch darauf zu achten, daß sie mit dem Polymersystem verträglich sind und andererseits die Schalttemperatur nicht negativ beeinflußt wird. Die Menge an Mittel die zur Herabsetzung des Gefrierpunktes benötigt wird, hängt von der Umgebungstemperatur ab, in der die thermotrope Schicht angewandt wird.

Die eingangs definierten Mischungen können neben den Komponenten a), b) und c) noch weitere Bestandteile enthalten.

Um eine hohe Dauergebrauchsfähigkeit der thermotropen Schichten aus Gelen zu erhalten, können diese gegen Bakterienbefall stabilisiert werden. Daher ist es sinnvoll den Mischungen Biozide zuzusetzen. Dies kann entweder durch organische Verbindungen geschehen, wie z.B. durch Formaldehyd oder 1,2-Benzisothiazolon oder anorganischer Verbindungen wie Natriumfluorid. Die Menge an Biozid richtet sich nach der Applikation (Zugänglichkeit durch Mikroorganismen) und der Aktivität des Biozids. Grundlagen zur Biozidstabilisierung sind z.B. in Farbe und Lack; 82; S. 108 ff (1976); Farbe und Lacke; 99; S. 105 ff (1993) oder im "Lehrbuch der pharmazeutischen Chemie" (W. Schmack, K. Mayer, M. Haake; Verlag Vieweg und Sohn, Braunschweig 1983; z.B. S. 537 ff) beschrieben.

Des weiteren werden den Mischungen vorzugsweise Photoinitiatoren für die radikalische Polymerisation zugesetzt. Geeignete Mengen liegen zwischen 0,01 bis 5 Gew.-%, besonders bevorzugt 0,03 bis 3 Gew.-%, bezogen auf die radikalisch polymerisierbaren Monomeren b).

Einen allgemeinen Überblick über geeignete Photoinitiatoren kann man z.B. durch den Artikel von H.F. Gruber in Prog. Polym. Sci., Vol. 17, S. 953 ff. (1992) erhalten.

Für die Herstellung von Hydrogelen mit Wasser als Lösungsmittel eignen sich besonders Verbindungen wie wasserlösliche Benzophenonderivate (J. Appl. Polym. Sci; 32, S. 6209-26 (1986); Polym. Paint Colour J.; 179, S. 684-687 (1989); Polym. Paint. Resin; 175; S. 246-251 (1985)), sulphonierte aromatische Ketone (Eur. Polym. J., Vol. 27, S. 69-75 (1991)), wasserlösliche Thioxanthonderivate (J. Appl. Polym. Sci, 34; S. 477-488 (1987)) wie z.B. 4-Benzoyl-N,N-dimethyl-N-(2-oxo-2-propenyloxy)ethylbenzol-methanaminiumbromid, 4-Benzoyl, N,N,N,trimethylbenzolmethanaminiumchlorid, 4-(3-Dimethylamino-2-hydroxypropoxy)-benzophenonmethylchlorid, 2-(3-Dimethylamino-2-hydroxypropoxy)-3,4-dimethyl- 9H-thioxanthen-9-one-methylchlorid. Die eingangs definierte Mischung enthält vorzugsweise
- 5 bis 40 Gew.-%,: besonders bevorzugt 10 bis 20 Gew.-% des unvernetzten Polymeren a),
- 1 bis 30 Gew.-%,: besonders bevorzugt 3 bis 10 Gew.-% radikalisch polymerisierbare Monomere b) und
- 30 bis 94 Gew.-%,: besonders bevorzugt 70 bis 87 Gew.-% Wasser, organische Lösungsmittel oder deren Gemische.

Die Mischung kann in einfacher Weise durch Zusammengeben der Komponenten und Homogenisieren, z.B. durch Rühren, hergestellt werden.

Die Herstellung des Gels kann dann vorzugsweise direkt in der für die thermotrope Schicht vorgesehenen Vorrichtung erfolgen.

Dazu wird die Mischung in diese Vorrichtung, z.B. ein Verglasungssystem, eingefüllt und mit energiereichem Licht bestrahlt.

Die Bestrahlung kann jedoch auch vorab erfolgen und das erhaltene Gel anschließend in die entsprechende Vorrichtung eingefüllt werden.

Bei der Bestrahlung polymerisieren und vernetzen die Monomeren b) so, daß sie ein dreidimensionales Netzwerk, bzw. ein Gel, bilden, welches das vorzugsweise unvernetzte Polymer a), das Lösungsmittel c) und gegebenenfalls weitere Zusatzstoffe enthält.

Vorzugsweise erfolgt die Bestrahlung mit UV-Licht oder Elektronenstrahlen.

Die Bestrahlung wird vorzugsweise solange durchgeführt, bis die Monomeren b) ein Gel mit einem Quellungsindex von vorzugsweise 2 bis 500, besonders bevorzugt 10 bis 400, ganz besonders bevorzugt 10 bis 100 und insbesondere 20 bis 50 gebildet haben. Der Quellungsindex ist dabei definiert als Quotient aus insgesamt aufgenommener Lösemittelmenge zur Masse der eingesetzten Monomeren b).

Die Bestrahlung erfolgt bevorzugt bei einer Temperatur von mindestens 5°C, besonders bevorzugt mindestens 10°C, ganz besonders bevorzugt mindestens 20°C unterhalb des Schaltbereichs bzw. unterhalb des Trübungspunkts als unterer Temperaturgrenze des Schaltbereichs.

Die Gele eignen sich zur Herstellung von thermotropen Schichten, welche die eingangs beim Polymer a) beschriebenen Bedingungen bezüglich Schaltbereich und Transparenzänderung erfüllen.

Gleichzeitig zeigen die Gele eine hohe Transparenz im homogenen Zustand, d.h. unterhalb des Schaltbereichs. Auch nach vielen Wiederholungen des Schaltvorgangs bleibt der Transparenzunterschied groß und der Schaltbereich eng. Vorteilhaft ist auch die geringe Schaltzeit.

Die Gele eignen sich daher besonders zur Herstellung von Verglasungssystemen mit thermotropen Eigenschaften und von Bauteilen für die Wärmeisolierung.

### Beispiele

### Herstellung von Polymeren a)

### Poly-N-Vinylcaprolactam (A)

In ein beheiztes Polymerisationsgefäß mit Zulauf wurden unter Rühren vorgelegt: 200 g Wasser, 500 g Methanol, 600 g N-Vinylcaprolactam und 3 g 2,2'-Azobis(2-methylbutyronitril). Die Vorlage wurde auf 85°C aufgeheizt und dann 4 h polymerisiert. Anschließend wurde das Polymerisat auf 25°C gekühlt und 700 g Wasser innerhalb von 3 h zugefahren und so lange gerührt bis eine homogene Mischung entstand.

Anschließend wurden 1000 g des Polymerisates bei 50°C unter Rühren vorgelegt und Methanol unter vermindertem Druck bei 100 mbar innerhalb von 2 h abdestilliert. Während der Destillation werden gleichzeitig 500 g Wasser zugefahren.

Man erhielt eine farblose wäßrige Polymerlösung mit einem Feststoffgehalt von 20 % (= Polymer A).

Der Trübungspunkt einer 10%igen Lösung des Polymeren in Wasser wurde mit 32°C bestimmt.

### N-Vinylcaprolactam Copolymere (B):

In ein beheiztes Polymerisationsgefäß mit einem Zulauf wurden unter Rühren vorgelegt: 200 g Wasser, 500 g Methanol, 350 g N-Vinylcaprolactam, 250 g N-Vinylpyrrolidon und 3 g 2,2'-Azo- bis(2-methylbutyronitril). Die Vorlage wurde auf 85°C aufgeheizt und dann 4 h polymerisiert. Anschließend wurde das Polymerisat auf 25°C gekühlt und 700 g Wasser innerhalb von 3 h zugefahren und so lange gerührt, bis eine homogene Mischung entstand.

Anschließend wurden 1000 g des Polymerisates bei 50°C unter Rühren vorgelegt und Methanol unter vermindertem Druck bei 100 mbar innerhalb von 2 h abdestilliert. Während der Destillation wurden gleichzeitig 500 g Wasser zugefahren.

Man erhielt eine farblose wäßrige Polymerlösung mit einem Feststoffgehalt von 20 % (= Polymer B).

Der Trübungspunkt einer 10%igen Lösung des Polymeren in Wassers wurde mit 52°C bestimmt.

### Polyvinylethercopolymer (C):

In einem Reaktionsgefäß mit Heizbad, Rührer, Trockeneiskühler und Zulaufgefäßen wurden 300 g einer Mischung aus 1275 g Vinylmethylether und 225 g Methyltriethylenglykolvinylether vorgelegt und das Reaktionsgefäß mit 30°C Außentemperatur beheizt.

Innerhalb von 15 min wurden in 3 Portionen 0,62 ml einer 3%igen Lösung von Bortrifluoriddihydrat in Dioxan zugegeben. Nach dem Anspringen der Reaktion wurden innerhalb von 5 Stunden die restlichen 1200 g der Monomermischung und 0,92 ml einer3%igen Lösung von Bortrifluoriddihydrat in Dioxan und 1,25 ml einer 1%igen Lösung von Oxalsäure in Dioxan kontinuierlich zugegeben.

Nach Ende der Zuläufe wurde die Reaktionsmischung auf 70°C aufgeheizt und 30 min nachpolymerisiert. Anschließend wurde 1 Stunde Vakuum angelegt (20 mbar) und nicht umgesetztes Monomer abgezogen. Es wurden 1450 g Produkt erhalten.

Eine 10%ige wäßrige Lösung des Polymeren wies einen Trübungspunkt von 33°C auf (= Lösung von Polymer C).

### Vernetzbares Polyvinylethercopolymer (D):

In einem Reaktionsgefäß mit Heizbad, Rührer, Trockeneiskühler und Zulaufgefäßen wurden 150 g einer Mischung aus 585 g Vinylmethylether und 150 g Methyltriethylenglycolvinylether, 15 g Vinyloxybutylacrylat und 0,1 g 2,6-Di-tert.-butyl-p-kresol vorgelegt und das Reaktionsgefäß mit 30°C Außentemperatur beheizt.

Innerhalb von 15 min wurden in 3 Portionen 0,50 ml einer 3%igen Lösung von Bortrifluoriddihydrat in Dioxan zugegeben. Nach dem Anspringen der Reaktion wurden innerhalb von 4 Stunden die restlichen 600 g der Monomermischung und 0,80 ml einer 3%igen Lösung von Bortrifluoriddihydrat in Dioxan und 0,80 ml einer 1%igen Lösung von Oxalsäure in Dioxan kontinuierlich zugegeben.

Nach Ende der Zuläufe wurde die Reaktionsmischung auf 50°C aufgeheizt und 30 min nachpolymerisiert. Anschließend wurde 1 Stunde Vakuum angelegt (20 mbar) und nicht umgesetztes Monomer abgezogen. Es wurden 700 g Produkt erhalten.

Eine 10%ige wäßrige Lösung des Polymeren wies einen Trübungspunkt von 35°C auf (= Lösung von Polymer D).

### Herstellung von Hydrogelen durch UV-Vernetzung:

Die Komponenten des Hydrogels wurden in den in Tabelle 1 - 3 angegebenen Mengen gemischt. Die Mischung wurde durch einen Filter mit 5 µm Porenweite gesaugt und im Wasserstrahlvakuum bei Raumtemperatur 30 min entgast.

Zur Herstellung des Gels wurde mit der Mischung eine Küvette aus Polyacrylat gefüllt (1 cm Schichtdicke), diese verschlossen und bei der in der Tabelle angegebenen Temperatur 30 min bestrahlt. Dabei wird ein UV-Flachbelichter mit einem Spektralbereich von 290 - 450 nm verwendet.

### Die Hydrogele wurden wie folgt charakterisiert:

### 1. Messung der Trübungstemperatur und Bestimmung der Eignung für Verglasungen

Zur Bestimmung der Transparenz wurden die Proben mit einem Lichtdurchlässigkeitsgerät bei 20°C vermessen. Das Gerät besteht im wesentlichen aus einer punktförmigen Lichtquelle und einer Photozelle. Der von der Photozelle abgegebene Photostrom dient als Maß für die Intensität des hindurchtretenden Lichtes. In dem Strahlengang zwischen Lichtquelle und Photozelle befindet sich eine beheizbare Probenhalterung. Eine mit destilliertem Wasser gefüllte Küvette diente als Referenz. Für Verglasungen besonders geeignete Proben weisen bei 20°C und einer Schichtdicke von 10 mm eine Transparent T1 von mindestens 85 % auf. (Tabellen)

Die Trübungstemperatur wird durch die Abnahme der Transparenz einer Probe bei Temperaturerhöhung ermittelt. Dabei wird die Probe mit 1°K/min aufgeheizt und die Intensität eines durch die Probe hindurchtretenden Lichtstrahles gemessen. Als Trübungstemperatur TP wird die Temperatur bezeichnet, bei der die Transparenz der Probe nur noch 50 % des bei 20°C ermittelten Wertes beträgt.

### 2. Prüfung der Reversibilität

Eine Probe wird von 20°C ausgehend mit 1°K/min auf eine Temperatur von 10°C oberhalb der vorher gemessenen Trübungstemperatur aufgeheizt (TP+10°C). Anschließend wird die Probe nach einer Haltezeit von 1 - 10 min wieder mit 1K/min auf 20°C abgekühlt und die Intensität gemessen. Besonders geeignete Proben weisen nach der Abkühlung eine Transparent T2 von mindestens 80 - 90 % der ursprünglichen Transparenz T1 bei 20°C auf.

### 3. Prüfung der Langzeitstabilität

Eine Probe wird ausgehend von 20°C mit 1K/min auf eine Temperatur von 10°C oberhalb der Trübungstemperatur TP aufgeheizt und bei dieser Temperatur 5 Stunden belassen. Anschließend wird die Probe wieder mit 1K/min auf 20°C abgekühlt. Besonders geeignete Proben weisen danach eine Transparent T3 von mindestens 70 % der ursprünglichen Transparenz T1 bei 20°C auf. Außerdem sollte sich dabei das Aussehen der Probe während der Haltezeit nicht wesentlich ändern, d.h. es sollten keine Inhomogenitäten oder Phasenseparationen auftreten. Das Aussehen der Probe nach dem Abkühlen sollte sich nicht von der Ausgangsprobe sichtbar unterscheiden.

### 4. Herstellung eines Modellfensters

Eine Mischung zur Herstellung des Hydrogels wurde in den Scheibenzwischenraum eines Modellfensters gegeben. Das Modellfenster bestand aus einer Fensterglasscheibe und zweiten Scheibe aus Acrylglas oder Quarzglas durch die eine Belichtung des Gels mit einem UV-Flachbettbelichter möglich war. Der Scheibenzwischenraum betrug i.d.R. 2 mm. Nach dem Befüllen wurde das Fenster bei einer geeigneten Vernetzungstemperatur 30 min bestrahlt und das Aussehen der mit Hydrogel gefüllten Scheibe beurteilt. Besonders geeignete Hydrogele wiesen keine Inhomogenitäten wie Schlieren o.ä. auf (mit + gekennzeichnet in den Tabellen).

Die Tabellen 1 bis 3 geben die Ergebnisse der Charakterisierung der Hydrogele gemäß voranstehenden Punkten 1. bis 4. wieder.

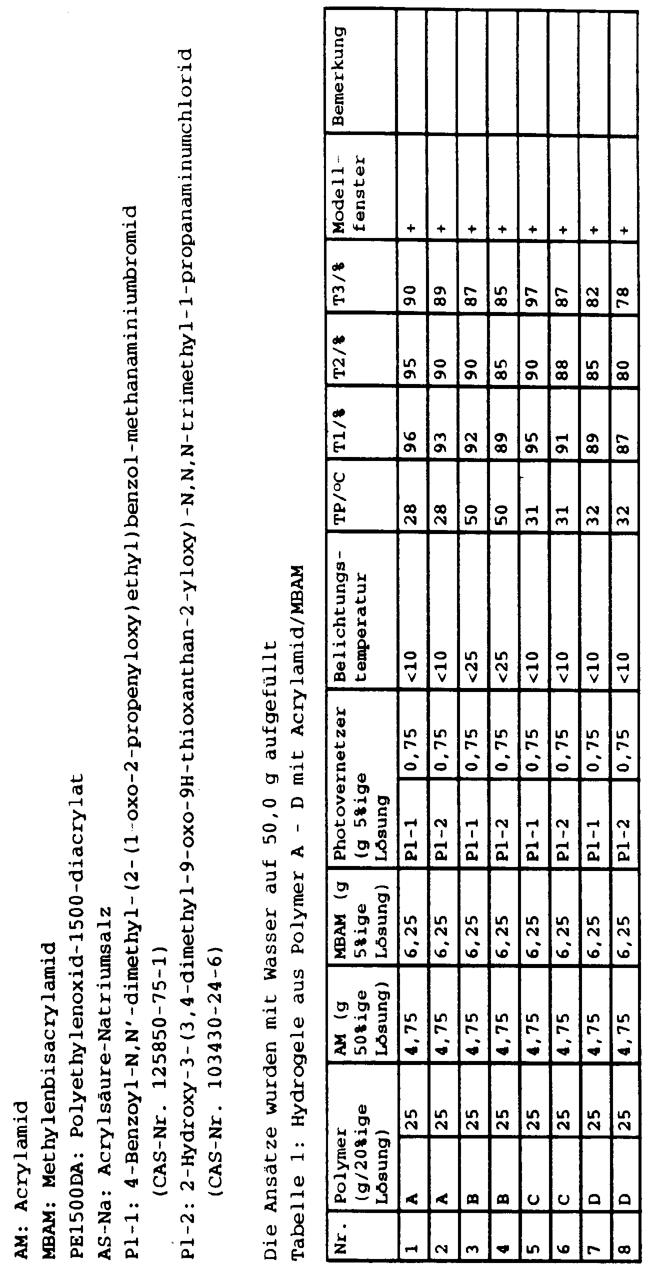

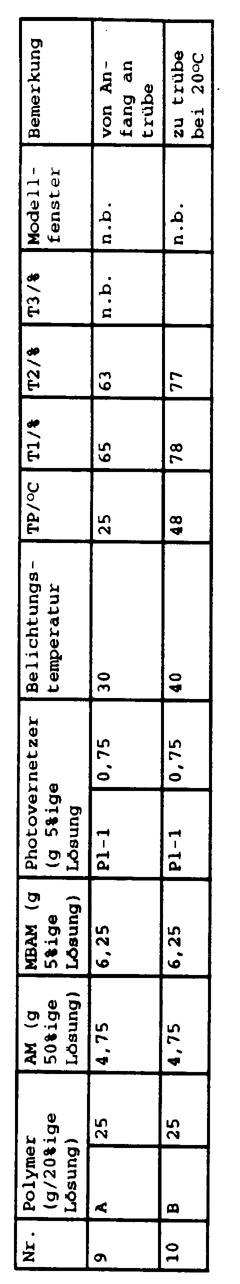

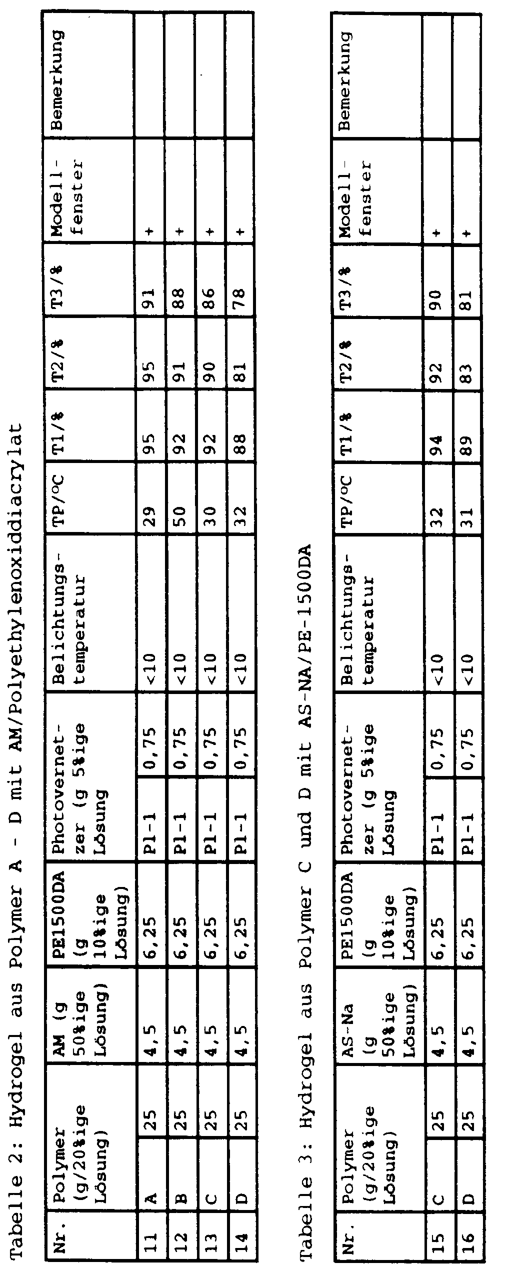

### Vergleichsbeispiele

### Verwendung der Lösungen von Polymer A - D ohne Hydrogelbildung:

Es wurden jeweils 15%ige wäßrige Lösungen der Polymeren A - D auf ihre erfindungsgemäße Eignung im Langzeitstabilitätstest getestet. Die Polymerlösungen veränderten sich während der Haltezeit deutlich. Alle Polymere begannen nach einer gewissen Zeit zu koagulieren und es bildeten sich deutlich sichtbare Inhomogenitäten aus. In der Regel kam es zu einer Phasenseperation in eine polymerreiche Phase und in eine polymerarme, weniger trübe wäßrige Phase. Die Eintrübungen waren reversibel, jedoch dauerte es z.T. sehr lange bis die ursprüngliche Transparenz wieder erreicht wurde. Bei Temperung der Modellscheiben waren nach der Abkühlung deutliche Schlieren zu sehen, die die optische Qualität beeinträchtigten.

### Hydrogel durch radikalische Polymerisation:

Zu einer Mischung aus 25 g Lösung von Polymer B, 4,75 g AM (50%ig in H₂O), 6,25 g MBAM (5%ig in H₂O) und 11 g Wasser werden 2,0 g einer 5%igen Lösung von 2,2'-Azo- bis(2-(2-imidazolin-2-yl)propan)dihydrochlorid gegeben. Die Lösung wurde entgast, in eine Küvette gefüllt und anschließend 5 h auf 40°C erwärmt. Man erhielt ein Hydrogel, das nur eine geringe Anfangstransparenz T1 von 75 % aufwies.

### Hydrogel durch Redoxpolymerisation bei niedriger Temperatur:

Zu einer Mischung aus 25 g einer 20%igen Lösung von Polymer C, 4,75 g einer 50%igen wäßrigen Lösung von Acrylamid, 6,25 g einer 5%igen Lösung von Methylenbisacrylamid und 12,65 g Wasser werden 1,0 g einer 5%igen wäßrigen Lösung von Ammoniumpersulfat gegeben und die Mischung entgast. Anschließend werden 1,0 g einer 5%igen wäßrigen Lösung von Tetramethylendiamin zugegeben. Es bildet sich ein Hydrogel innerhalb von 10 min. Das Hydrogel wies eine Transparenz T1 von > 90 % auf.

Mit einer gleichen Mischung wurde versucht, ein doppelscheibiges Modellfenster mit einer Größe von 30*30 und einem Scheibenabstand von 2 mm zu füllen. Dabei traten jedoch deutliche Inhomogenitäten auf, da das Gel auspolymerisierte bevor eine vollständige Füllung der Scheibe erreicht werden konnte.

### Hydrogel durch photochemische Vernetzung von Polymer D:

Zu 49 g einer 10%igen wäßrigen Lösung von Polymer D werden 1,0 g einer 5%igen Lösung von 4-Benzoyl-N,N'-dimethyl-(2-(1-oxo-2-propenyloxy)ethyl)benzol-methanaminiumbromid gegeben. Die Mischung wurde filtriert, entgast und 30 min bestrahlt. Man erhält ein Hydrogel, das bei 20°C eine Transparenz T1 von > 90 % aufweist. Der Trübungspunkt des Gels wurde mit 33°C bestimmt. Die Eintrübung war reversibel. Allerdings schrumpfte das Gel bei Erwärmung, so daß Inhomogenitäten sichtbar wurden. Bei der Bestimmung der Langzeitstabilität bildete sich eine polymerreiche Phase, die trüb war und eine überstehende weniger trübe Phase. Aufgrund der deutlich sichtbaren Inhomogenitäten ist das Gel für die erfindungsgemäße Anwendung nicht brauchbar.

## Patentansprüche

1. Verfahren zur Herstellung von Gelen für thermotrope Schichten, dadurch gekennzeichnet, daß
eine Mischung, enthaltend
a) ein unvernetztes Polymer, ausgewählt aus Poly-N-Vinylcaprolactam, Copolymere von N-Vinylcaprolactam mit mindestens 20 Gew.-% N-Vinylcaprolactam oder Polyvinyletherhomo- oder- copolymerisate
b) radikalisch polymerisierbare Monomere, wobei es sich um ein Monomerengemisch aus 70 bis 99,9 Gew.-% radikalisch polymerisierbaren, nicht vernetzbaren Monomeren D und 0,1 bis 30 Gew.-% vernetzbaren Monomeren E handelt, und
c) Wasser oder ein organisches Lösungsmittel oder deren Gemische
mit energiereichem Licht bestrahlt wird.

## Claims

1. A process for preparing gels for thermotropic layers, which comprises
irradiating a mixture comprising
a) an uncrosslinked polymer selected from poly-N-vinylcaprolactam, copolymers of N-vinylcaprolactam with at least 20% by weight N-vinylcaprolactam or polyvinyl ether homo-or copolymers
b) monomers capable of free-radical polymerization, in the form of a monomer mixture of from 70 to 99.9% by weight of noncrosslinkable monomers D which are capable of free-radical polymerization and from 0.1 to 30% by weight of crosslinkable monomers E, and
c) water or an organic solvent or mixtures thereof,
with high-energy light.

## Revendications

1. Procédé pour la production de gels pour des couches thermotropes, caractérisé en ce que,
un mélange, contenant
a) un polymère non réticulé, choisi parmi le poly-N-vinylcaprolactame, les copolymères du N-vinyl-caprolactame ayant au moins 20% en poids de N-vinyl-caprolactame ou les homopolymères ou copolymères de poly(éther vinylique),
b) des monomères polymérisables par voie radicalaire, où il s'agit d'un mélange de monomères constitué de 70 à 99,9% en poids de monomères D polymérisables par voie radicalaire et non réticulables et de 0,1 à 30% en poids de monomères E réticulables, et
c) de l'eau ou un solvant organique ou leurs mélanges,
est irradié avec une lumière riche en énergie.
